# EUROPÄISCHE PATENTSCHRIFT

(11) **EP 1 979 647 B1**
(45) Veröffentlichungstag und Bekanntmachung des Hinweises auf die Patenterteilung: **25.11.2009**
(21) Anmeldenummer: 06846950.1
(22) Anmeldetag: 27.12.2006
(51) Int. Cl.: F16F 15/123

(54) **TORSIONSSCHWINGUNGSDÄMPFER**
TORSIONAL VIBRATION DAMPER
AMORTISSEUR DE VIBRATIONS À TORSION

(30) Priorität: 18.01.2006 DE 102006002591
(43) Veröffentlichungstag der Anmeldung: 15.10.2008
(73) Patentinhaber: LuK Lamellen und Kupplungsbau Beteiligungs KG, 77815 Bühl (DE)
(72) Erfinder: MANGANO NETO, Salvador, CEP-18046-070 Sorocaba (BR); OLIVEIRA, José Paulo, CEP-18053-363 Sorocaba (BR); SILVA, Julio Cordeiro, CEP-18053-363 Sorocaba (BR)
(86) Internationale Anmeldenummer: PCT/DE2006/002319
(87) Internationale Veröffentlichungsnummer: WO 2007/082501

(56) Entgegenhaltungen:
- DE-A1- 3 636 014
- DE-A1- 10 312 786
- US-A- 5 295 910

## Beschreibung

Die Erfindung betrifft Torsionsschwingungsdämpfer mit zumindest einem Eingangsteil und zumindest einem Ausgangsteil, die entgegen einer Dämpfungseinrichtung verdrehbar sind, welche wenigstens im Wesentlichen in Umfangs- bzw. Tangentialrichtung gegenüber der Rotationsachse des Torsionsschwingungsdämpfers ausgerichtete Energiespeicher und parallel zu diesen wirksame Hysteresemittel aufweisen. Derartige Torsionsschwingungsdämpfer sind beispielsweise durch die US 3,578,121 C oder die US 3,414,101 C, aber insbesondere durch die US-A-5295910 bekannt geworden.

Der vorliegenden Erfindung lag die Aufgabe zugrunde, einen Torsionsschwingungsdämpfer der eingangs genannten Art zu schaffen, der eine sehr hohe Drehmomentübertragungskapazität aufweist, so dass dieser auch in Lastkraftwagen eingesetzt werden kann. Ein weiteres Ziel bestand darin, den Torsionsschwingungsdämpfer besonders kompakt auszugestalten, um den notwendigen Einbauraum auf ein Minimum zu reduzieren. Weiterhin soll der Torsionsschwingungsdämpfer in besonders einfacher und kostengünstiger Weise herstellbar sein.

Ein gemäß der Erfindung ausgestalteter Torsionsschwingungsdämpfer zeichnet sich unter anderem dadurch aus, dass die Dämpfungseinrichtung wenigstens drei parallel zueinander wirksame Dämpfer umfasst, nämlich einen ersten Dämpfer, einen zweiten Dämpfer und einen dritten Dämpfer, wobei die Energiespeicher des ersten Dämpfers auf einem ersten Durchmesserbereich angeordnet sind und die Energiespeicher des zweiten und dritten Dämpfers jeweils auf einem gegenüber dem ersten Durchmesserbereich radial versetzten zweiten und dritten Durchmesserbereich angeordnet sind. Durch die Verwendung wenigstens dreier Dämpfer, die parallel geschaltet sind, kann eine sehr hohe Verdrehwiderstandsrate zwischen dem Eingangsteil und dem Ausgangsteil des Torsionsschwingungsdämpfers realisiert werden, da sich die Verdrehwiderstandsraten der einzelnen Dämpfer addieren. Auch kann durch eine radial versetzte Anordnung der Energiespeicher der wenigstens drei Dämpfer eine axial gedrungene Bauweise erzielt werden.

Für den Aufbau des Torsionsschwingungsdämpfers kann es vorteilhaft sein, wenn der zweite und dritte Durchmesserbereich, auf denen die Energiespeicher des zweiten und dritten Dämpfers angeordnet sind, im Wesentlichen identisch sind. Durch eine derartige Ausgestaltung wird die Möglichkeit geschaffen die die Energiespeicher des zweiten und dritten Dämpfers aufnehmenden Bauteile zumindest im Wesentlichen identisch zu gestalten, wodurch die Herstellungskosten reduziert werden können.

Weiterhin kann es vorteilhaft sein, wenn der erste Durchmesserbereich größer ist als der zweite und dritte Durchmesserbereich. Für manche Anwendungsfälle kann es jedoch auch zweckmäßig sein, wenn der erste Durchmesserbereich kleiner ist als der zweite und dritte Durchmesserbereich.

In vorteilhafter Weise können die Energiespeicher des zweiten und dritten Dämpfers innerhalb des Torsionsschwingungsdämpfers derart angeordnet werden, dass sie axial beabstandet sind, so dass die Energiespeicher des ersten Dämpfers im Bereich dieses axialen Abstandes und radial versetzt gegenüber den Energiespeichern des zweiten und dritten Dämpfers angeordnet werden können. Dieser axiale Abstand kann dabei derart bemessen sein, dass, in axialer Richtung des Torsionsschwingungsdämpfers betrachtet, eine Überschneidung der Energiespeicher des ersten Dämpfers mit den Energiespeichern des zweiten und dritten Dämpfers vorhanden ist. Eine derartige Ausgestaltung ermöglicht eine axial gedrungene Bauweise, da die Energiespeicher des zweiten und dritten Dämpfers axial verhältnismäßig nahe angeordnet werden können. Um auch in radialer Richtung eine gedrungene Bauweise zu erzielen, kann ein Aufbau des Torsionsschwingungsdämpfers vorteilhaft sein, bei dem die Energiespeicher des ersten Dämpfers und die Energiespeicher des zweiten und dritten Dämpfers radial sehr nahe angeordnet sind, wobei gegebenenfalls auch eine gewisse radiale Überschneidung zwischen den Energiespeichern des ersten Dämpfers und denen des zweiten und dritten Dämpfers vorteilhaft sein kann.

Obwohl die Energiespeicher der einzelnen Dämpfer zumindest im Wesentlichen den gleichen Außendurchmesser aufweisen können, kann es zweckmäßig sein, wenn Energiespeicher mit unterschiedlichen Außendurchmessern zum Einsatz kommen. Besonders zweckmäßig kann es sein, wenn die Energiespeicher des ersten Dämpfers einen größeren Außendurchmesser besitzen als die Energiespeicher des zweiten und dritten Dämpfers. Bei einer derartigen Ausgestaltung kann es vorteilhaft sein, wenn die zur Bildung des zweiten und dritten Dämpfers verwendeten Energiespeicher identisch sind, wodurch wiederum die Herstellungskosten verringert werden können.

Die Energiespeicher können in vorteilhafter Weise durch Schraubenfedern gebildet sein, insbesondere durch Schraubendruckfedern.

Für den Aufbau des Torsionsschwingungsdämpfers kann es zweckmäßig sein, wenn das Eingangsteil zwei axial beabstandete, drehfest miteinander verbundene Scheiben, die vorzugsweise als Blechbauteile ausgebildet sind, umfasst, wobei jede Scheibe wiederum mit einem axial von dieser beabstandeten, scheibenförmigen Teil, das ebenfalls als Blechbauteil ausgebildet sein kann, drehfest verbunden sein kann und diese scheibenförmigen Teile jeweils auf der dem zwischen den beiden Scheiben vorhandenen Zwischenraum abgekehrten Seite der Scheiben angeordnet sind.

Das Ausgangsteil kann in vorteilhafter Weise einen Nabenkörper umfassen, der eine Innenverzahnung und eine Außenprofilierung besitzt, wobei diese Außenprofilierung mit einer Innenprofilierung wenigstens eines von drei auf dem Nabenkörper aufgenommenen Flanschen zusammenwirkt. Die Außenprofilierung kann dabei ebenfalls verzahnungsartig ausgebildet sein. Der Nabenkörper kann als Sinterteil, Schmiedeteil oder Kaltfließpressteil hergestellt werden und, falls notwendig, spanabhebend nachbearbeitet werden. Die Flansche können als Fließpressteil, Schmiedeteil oder als Blechformteil hergestellt werden. Nabenkörper mit Außenprofilierungen bzw. Flansche mit Innenprofilierungen sind grundsätzlich bekannt, beispielsweise durch die DE 19616479 A1, die DE 2814240 A1 oder die DE 1952620 A1.

Obwohl es für manche Anwendungsfälle zweckmäßig sein kann, wenn zwischen der Innenprofilierung wenigstens eines der Flansche und der Außenprofilierung des Nabenkörpers kein Verdrehspiel vorhanden ist, ist es überwiegend vorteilhaft, wenn die Innenprofilierungen aller Flansche ein Verdrehspiel gegenüber der Außenprofilierung des Nabenkörpers besitzen. Das Verdrehspiel der Flansche gegenüber dem Nabenkörper kann unterschiedlich bemessen sein. Besonders vorteilhaft kann es jedoch sein, wenn alle Flansche das gleiche Verdrehspiel besitzen. Bei einer derartigen Ausgestaltung ist es zweckmäßig, wenn in diesem Verdrehspiel Energiespeicher geringerer Steifigkeit eines Leerlaufdämpfers wirksam sind. Die Energiespeicher des Leerlaufdämpfers bewirken, dass die Flansche gegenüber dem Nabenkörper in eine winkelmäßige Ausgangsposition bzw. Ruheposition gedrängt werden, in der sie in beide Drehrichtungen ein Teilverdrehspiel gegenüber dem Nabenkörper aufweisen. Die Summe dieser Teilverdrehspiele in Schub- und Zugrichtung entspricht dem Verdrehspiel bzw. Gesamtverdrehspiel.

Für den Aufbau und die Funktion des Torsionsschwingungsdämpfers ist es besonders zweckmäßig, wenn von den drei auf dem Nabenkörper aufgenommenen Flanschen der erste radial verlaufende Flansch in dem zwischen den beiden Scheiben vorhandenen Zwischenraum aufgenommen ist, und der zweite und dritte radial verlaufende Flansch jeweils in einem Zwischenraum aufgenommen ist, der zwischen jeweils einer der Scheiben und dem dieser in axialem Abstand zugeordneten, scheibenförmigen Teil vorhanden ist. Für die Aufnahme der entsprechenden Energiespeicher besitzen sowohl die Scheiben als auch die scheibenförmigen Teile und die Flansche entsprechende Aufnahmen, welche Abstütz- bzw. Beaufschlagungs-und Führungsbereiche für die Energiespeicher bilden. Derartige Aufnahmen können in einfacher Weise durch fensterförmige Ausschnitte in den Bauteilen gebildet werden und/oder durch in die entsprechenden Bauteile eingebrachte Vertiefungen bzw. Anprägungen, welche taschenartig ausgebildet sein können.

In vorteilhafter Weise kann axial zwischen den beiden Scheiben und dem ersten Flansch wenigstens eine Reibeinrichtung vorgesehen werden. Eine derartige Reibeinrichtung kann über den gesamten Verdrehwinkel des ersten Dämpfers wirksam sein. Zusätzlich zu einer derartigen Reibeinrichtung kann auch eine so genannte Lastreibeinrichtung vorgesehen werden. Derartige Reibeinrichtungen besitzen ein Verdrehspiel, so dass sie bei Drehsinnumkehrung zwischen Eingangsteil und Ausgangsteil des Torsionsschwingungsdämpfers über dieses Verdrehspiel unwirksam sind.

Es kann auch zumindest eine Reibeinrichtung zwischen wenigstens einem Flansch des zweiten und/oder dritten Dämpfers und jeweils dem diesem Flansch zugeordneten, scheibenförmigen Teil und der entsprechenden Scheibe vorgesehen werden.

Die Reibeinrichtungen können in vorteilhafter Weise radial innerhalb der entsprechenden Energiespeicher angeordnet werden. Für manche Anwendungsfälle kann es jedoch auch zweckmäßig sein, wenn wenigstens eine Reibeinrichtung radial außerhalb der entsprechenden Energiespeicher angeordnet ist.

Bei Vorhandensein eines so genannten Leerlaufdämpfers, welcher auch unter der Bezeichnung Vordämpfer bekannt ist, kann es zweckmäßig sein, wenn dieser Leerlaufdämpfer radial innerhalb der Energiespeicher des zweiten und dritten Dämpfers angeordnet ist. Die Energiespeicher des Leerlaufdämpfers können dabei der Außenverzahnung des Nabenkörpers praktisch benachbart sein bzw. gegenüber dieser in einem geringen Abstand vorgesehen werden. Die Energiespeicher des Vordämpfers können gegebenenfalls, wie dies durch den Stand der Technik bekannt ist, auch zumindest teilweise im radialen Bereich der Außenverzahnung des Nabenkörpers bzw. der innenverzahnung eines Flansches, vorzugsweise des ersten Flansches vorgesehen werden. Hierfür müssen diese Verzahnungen entsprechend ausgestaltet werden, wie dies beispielsweise auch durch die DE 2814240 A1 vorgeschlagen wurde. Um jedoch die entsprechenden Verzahnungen nicht zu schwächen, kann es vorteilhaft sein, wenn ein zusätzliches Scheibenteil als Ausgangsteil für den Vordämpfer dient, welches von dem Nabenkörper drehfest getragen wird. Dieses zusätzliche Scheibenteil besitzt Ausnehmungen bzw. Aufnahmen für die Energiespeicher des Leerlaufdämpfers. Die gegenüber diesem Scheibenteil axial überragenden Bereiche der Energiespeicher des Leerlaufdämpfers können in Aufnahmen, welche im ersten Flansch vorgesehen werden, axial eintauchen. Derartige Aufnahmen können beispielsweise durch axiale Einbringung von taschenförmigen Bereichen gebildet sein.

Für den Aufbau und die Funktion des Torsionsschwingungsdämpfers kann es weiterhin zweckmäßig sein, wenn ein ringförmiges Bauteil mit dem ersten Flansch drehfest verbunden ist, wobei dieses Bauteil axial zwischen diesem Flansch und einer der beidseits desselben angeordneten Scheiben vorgesehen ist. Dieses ringförmige Bauteil kann ein Bestandteil einer Reibeinrichtung bilden und Aufnahmen für die Energiespeicher des Leerlaufdämpfers begrenzen. Auch diese Aufnahmen können taschenförmig ausgebildet sein. Bei einer derartigen Ausgestaltung ist das mit dem Nabenkörper drehfeste Scheibenteil des Leerlaufdämpfers axial zwischen diesem ringförmigen Bauteil und dem ersten Flansch angeordnet.

Anhand der Figuren 1 bis 3 sei die Erfindung näher erläutert.

Dabei zeigt:
- Figur 1: eine Ansicht in Richtung des Teiles I der Figur 2 eines Torsionsschwingungsdämpfers, der hier durch eine Kupplungsscheibe gebildet ist,
- Figur 2: einen Schnitt gemäß der Linie A1-A1 der Figur 1 und
- Figur 3: eine teilweise Vergrößerung des Schnittes gemäß Figur 2.

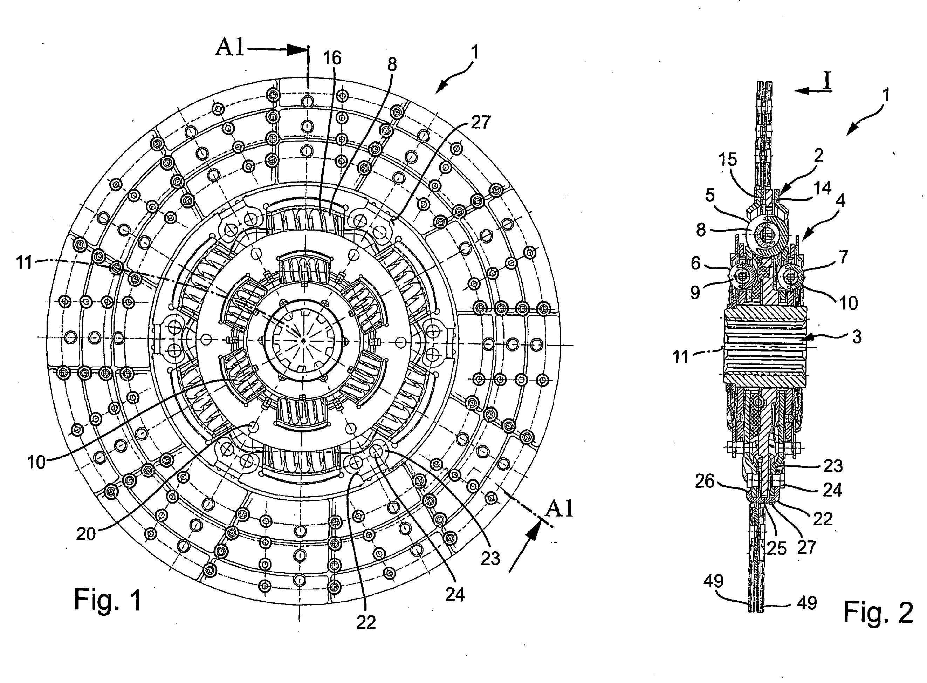

Die Figuren 1 bis 3 zeigen einen Torsionsschwingungsdämpfer 1, der bei dem dargestellten Ausführungsbeispiel der Erfindung eine Kupplungsscheibe bildet, welche in an sich bekannter Weise zur Verwendung mit einer Reibungskupplung vorgesehen ist.

Die Kupplungsscheibe 1 besitzt ein Eingangsteil 2 und ein Ausgangsteil 3, zwischen denen eine Dämpfungseinrichtung 4 vorgesehen ist, mittels derer die Drehschwingungen, welche in einem Antriebsstrang auftreten, zumindest auf ein akzeptables Maß gefiltert werden können.

Die Dämpfungseinrichtung 4 besitzt drei Dämpfer 5, 6 und 7, die zwischen dem Eingangsteil 2 und dem Ausgangsteil 3 parallel wirksam sind, so dass sich die von diesen erzeugten Verdrehwiderstände addieren. Die drei Dämpfer 5, 6 und 7 umfassen jeweils Energiespeicher 8, 9 und 10, die bei dem dargestellten Ausführungsbeispiel jeweils durch wenigstens eine Schraubendruckfeder gebildet sind. Wenigstens einzelne der Energiespeicher 8, 9 und 10 könnten jedoch auch durch eine kompressible Gummifeder gebildet sein oder aber aus einer Kombination von Gummifeder und Schraubenfeder, wie dies an sich ebenfalls durch den Stand der Technik bekannt ist.

Aus Figur 1 ist ersichtlich, dass bei dem dargestellten Ausführungsbeispiel die einzelnen Dämpfer 5, 6 und 7 jeweils eine Mehrzahl von Schraubenfedern 8, 9 und 10 aufweisen, die hier in Bezug auf die Rotationsachse 11 des Torsionsschwingungsdämpfers in Umfangsrichtung bzw. in tangentialer Richtung angeordnet sind.

Aus Figur 1 ist weiterhin erkennbar, dass bei dem dargestellten Ausführungsbeispiel zumindest die Dämpfer 5 und 7 einstufig ausgebildet sind, das bedeutet, dass alle Federn zumindest des Dämpfers 5 und 7 jeweils gleichzeitig beansprucht werden. Die Abstimmung ist bei dem dargestellten Ausführungsbeispiel auch derart ausgelegt, dass zumindest die Federn 8 des Dämpfers 5 und die Federn 10 des Dämpfers 7 bei einer Relativverdrehung zwischen dem Eingangsteil 2 und dem Ausgangsteil 3 gleichzeitig beansprucht, also komprimiert werden. Bei dem dargestellten Ausführungsbeispiel ist die Auslegung gar derart erfolgt, dass alle drei Dämpfer 5, 6 und 7 über den gleichen Verdrehwinkel zwischen dem Eingangsteil 2 und dem Ausgangsteil 3 wirksam sind.

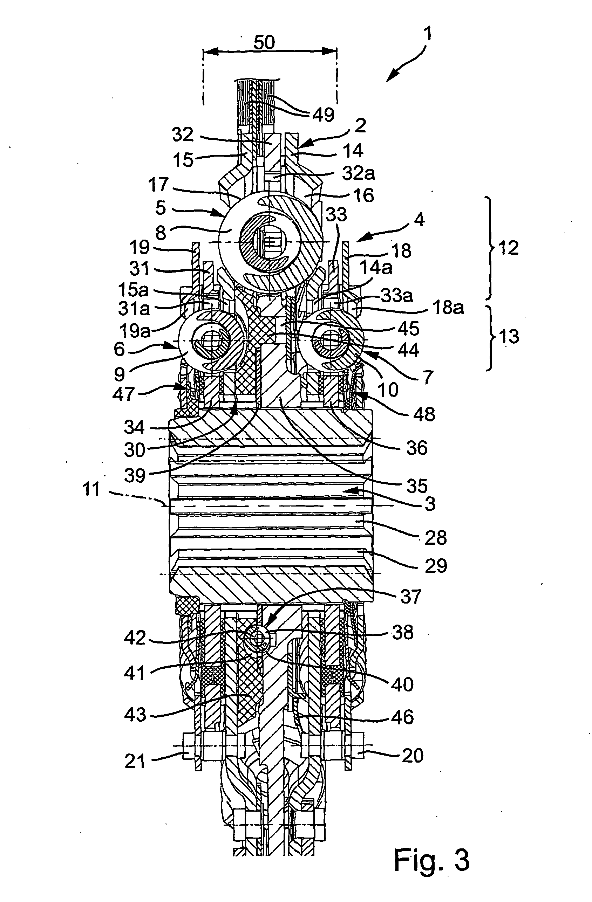

Wie insbesondere aus den Figuren 2 und 3 zu entnehmen ist, sind die zur Bildung der drei Dämpfer 5, 6 und 7 dienenden Bauteile derart ausgestaltet, dass die Energiespeicher 8 des ersten Dämpfers 5 auf einem größeren Durchmesserbereich 12 angeordnet sind als der Durchmesserbereich 13, auf dem die Energiespeicher 9 und 10 des zweiten Dämpfers 6 und dritten Dämpfers 7 angeordnet sind. Aus Figur 3 ist auch ersichtlich, dass wenigstens einzelne der zu einem Dämpfer 5, 6 oder 7 gehörenden Energiespeicher 8, 9 und 10 auch durch mehrere Schraubenfedern, die in bekannter Weise axial ineinander geschachtelt sind, gebildet sein können.

Aus Figur 3 ist auch ersichtlich, dass bei dem dargestellten Ausführungsbeispiel sich die Durchmesserbereiche 12 und 13 in radialer Richtung nicht überlagern. Um eine radial gedrungene Bauweise zu ermöglichen, kann es bei Bedarf auch zweckmäßig sein, wenn - in radialer Richtung betrachtet - die Energiespeicher 8 einerseits und die Energiespeicher 9 und 10 andererseits radial näher vorgesehen werden, so dass gegebenenfalls auch eine radiale Überlagerung der Durchmesserbereiche 12 und 13 gegeben sein kann.

Aus Figur 3 ist weiterhin ersichtlich, dass hier der zweite Dämpfer 6 und der dritte Dämpfer 7 spiegelsymmetrisch praktisch identisch aufgebaut sind, so dass zur Bildung dieser beiden Dämpfer 6 und 7 zumindest im Wesentlichen die gleichen Bauteile verwendet werden können. Diese Bauteile brauchen dann lediglich entsprechend der Zuordnung zu dem Dämpfer 6 oder 7 um 180° verdreht axial verbaut werden. Um einen derartigen Aufbau zu ermöglichen, ist auch die umfangsmäßige Verteilung der Energiespeicher 9 und 10 der beiden Dämpfer 6 und 7 entsprechend abgestimmt. Aus Figur 1 ist ersichtlich, dass bei dem dargestellten Ausführungsbeispiel eine gleichmäßige symmetrische Verteilung in Umfangsrichtung der entsprechenden Energiespeicher 9 und 10 vorhanden ist.

Die Dämpfer 6 und 7 und somit auch deren Energiespeicher 9 und 10 sind axial beabstandet angeordnet. In Figur 3 repräsentiert der axiale Abstand 50 den Abstand zwischen den Längsachsen der Energiespeicher 9 und 10 der beiden Dämpfer 6 und 7. Aus Figur 3 ist weiterhin ersichtlich, dass die Energiespeicher 8 des radial äußeren Dämpfers 5 sich im Bereich dieses axialen Abstandes 50 befinden. Bei dem dargestellten Ausführungsbeispiel sind zumindest die Energiespeicher 8 des äußeren Dämpfers 5 wenigstens im Wesentlichen axial symmetrisch gegenüber den Energiespeichern 9 und 10 der beiden radial inneren Dämpfer 6 und 7 angeordnet. Die Anordnung der Energiespeicher 8, 9 und 10 und deren Außendurchmesser sind außerdem derart aufeinander abgestimmt, dass zumindest eine gewisse axiale Überschneidung bzw. Überlagerung dieser Energiespeicher vorhanden ist. Eine derartige Überschneidung ermöglicht eine axial gedrungene Bauweise des Torsionsschwingungsdämpfers 1.

Das Eingangsteil 2 umfasst zwei Scheiben 14, 15, die axial beabstandet und drehfest miteinander verbunden sind. Die Scheiben 14, 15 bilden Aufnahmen 16, 17 für die als Schraubenfeder ausgebildeten Energiespeicher 8. Die Aufnahmen 16, 17 sind hier durch Fenster gebildet, welche in die aus Blech bestehenden Scheiben 14, 15 eingebracht sind.

Jede der Scheiben 14, 15 ist mit einem scheibenförmigen Bauteil 18, 19 drehfest verbunden, welches jeweils von der ihm zugeordneten Scheibe 14, 15 axial beabstandet ist. Hierfür werden bei dem dargestellten Ausführungsbeispiel Abstandsbolzen 20, 21 verwendet, die mit den jeweiligen Bauteilen 14, 18 bzw. 15, 19 vernietet sind. Die Niete bzw. Bolzen 20, 21 sind, wie aus Figur 1 erkennbar, über den Umfang verteilt angeordnet, wobei bei dem dargestellten Ausführungsbeispiel 6 derartige Verbindungselemente 20 bzw. 21 Verwendung finden. In bekannter Weise könnten jedoch auch einstückig mit wenigstens einem der Bauteile 14, 18 bzw. 15, 19 ausgebildete Verbindungselemente Verwendung finden. Derartige Verbindungselemente können durch Laschen gebildet sein, die aus dem entsprechenden Bauteil herausgebildet werden und zum Beispiel flachnietenförmig ausgebildet sind.

Obwohl es grundsätzlich möglich ist, auch die beiden Scheiben 14, 15 mittels Abstandsnieten bzw. Abstandsbolzen starr miteinander zu verbinden, kommen bei dem dargestellten Ausführungsbeispiel spezielle Verbindungselemente 22 in Figur 1 und 2 zum Einsatz, welche eine radial gedrungene Bauweise ermöglichen. Derartige Verbindungselemente könnten jedoch auch einstückig mit wenigstens einer der Scheiben 14, 15 ausgebildet sein.

Bei dem dargestellten Ausführungsbeispiel sind die Verbindungselemente 22 durch winkelförmige Blechformteile gebildet, die, wie aus Figur 1 erkennbar ist, einen verbreiterten Fußbereich 23 aufweisen zur Aufnahme von zwei Nietelementen 24, welche eine feste Verbindung zwischen dem jeweiligen Verbindungselement 22 und der entsprechend zugeordneten Scheibe 14 oder 15 herstellen. Bei dem dargestellten Ausführungsbeispiel sind die Verbindungselemente 22 lediglich an der Scheibe 14 vorgesehen. Es könnten jedoch in Umfangsrichtung alternierend derartige winkelförmige Verbindungselemente 22 sowohl an der Scheibe 14 als auch an der Scheibe 15 vorgesehen werden. Wie aus Figur 2 erkennbar ist, erstreckt sich der axiale Schenkel 25 eines Verbindungselementes 22 axial über die Scheibe 15 hinaus und besitzt zumindest einen, hier radial nach innen abgebogenen Bereich 26, der die axiale Sicherung zwischen den beiden Scheiben 14, 15 gewährleistet. Aus Figur 1 ist weiterhin erkennbar, dass sich die axialen Schenkel 25 der Verbindungselemente 22 durch radiale Einschnitte 27 der Scheiben 14 und 15 hindurch erstrecken. Die umfangsmäßige Erstreckung der Ausschnitte 27 ist dabei auf die Breite der Schenkel 25 und/oder der Befestigungsbereiche 26 abgestimmt, um eine drehfeste Verbindung zwischen den beiden Scheiben 14 und 15 zu gewährleisten. Die Verbindungselemente 22 bilden außerdem wenigstens einen axialen Abstützbereich bzw. eine axiale Abstützschulter zumindest für die Scheibe 15, wodurch gewährleistet wird, dass ein definierter axialer Abstand zwischen den beiden Scheiben 14, 15 vorhanden ist. Flache Abstandselemente, die vorzugsweise durch Stanzen aus Blechmaterial hergestellt werden, sind beispielsweise durch die FR 2526906 A1, die FR 2319814 A1, die FR 2362309 A1 und die FR 2459913 A1 sowie den darin angegebenen Stand der Technik bekannt geworden. Solche Abstandselemente können zur Verbindung zwischen wenigstens einzelnen der scheibenförmigen Bauteile 14, 15, 18, 19 dienen.

Wie unter anderem in Zusammenhang mit Figur 3 erkennbar ist, umfasst das Ausgangsteil 3 einen Nabenkörper 28, der eine Innenverzahnung 29 besitzt, mittels der der Nabenkörper 28 mit einer anzutreibenden Welle, insbesondere einer Getriebeeingangswelle, drehfest verbindbar ist. Am Außenumfang besitzt der Nabenkörper 28 eine Profilierung 30, die in bekannter Weise ein Verzahnungsprofil bzw. eine Außenverzahnung 30 bilden kann.

Derartige Nabenkörper sind beispielsweise durch die DE 1801969 A1, die DE 1680669 A1 oder die DE 1952620 A1 bekannt geworden. Nabenkörper können als Schmiedeteil, Sinterteil oder Fließpressteil hergestellt werden.

Nabenkörper für Torsionsschwingungsdämpfer tragen an ihrem Außenumfang Flansche bzw. scheibenförmige Körper, die eine Innenprofilierung aufweisen, welche zur Drehmomentübertragung mit der Außenprofilierung des Nabenkörpers zusammenwirken. Es gibt Anwendungsfälle, bei denen die ineinander greifenden Profilierungen eines Nabenkörpers und eines Flansches praktisch spielfrei, also ohne Verdrehungsmöglichkeit, ausgeführt sind. Überwiegend dienen jedoch derartige Konstruktionen zur Realisierung eines definierten Verdrehspiels zwischen Nabenkörper und Flansch, wobei innerhalb dieses Verdrehspiels in den meisten Fällen ein Vordämpfer, also ein Dämpfer mit verhältnismäßig geringem Verdrehwiderstand wirksam ist, der üblicherweise für den Leerlauf ausgelegt ist.

Bei der erfindungsgemäßen Konstruktion sind auf dem Nabenkörper 28 drei Flansche 31, 32, 33 in axialem Abstand aufgenommen. Die Flansche 31, 32, 33 besitzen jeweils eine Innenprofilierung bzw. Innenverzahnung 34, 35, 36, die hier mit Verdrehspiel, in ähnlicher Weise wie durch den vorerwähnten Stand der Technik bekannt, in die Außenverzahnung 30 des Nabenkörpers 28 greifen. Dieses Verdrehspiel ist vorgesehen, damit der hier vorhandene Vordämpfer 37 über einen bestimmten Verdrehwinkel alleine wirksam sein kann. Bei der dargestellten Konstruktion wird nach dem Aufbrauchen des zumindest zwischen der Innenverzahnung 36 und der Außenverzahnung 30 vorhandenen Verdrehspiels der Vordämpfer 37 überbrückt, so dass dann die Energiespeicher, in Form von Schraubenfedern 38, des Vordämpfers 37 nicht weiter komprimiert werden können.

Wie aus Figur 3 ersichtlich, ist der radial verlaufende Flansch 32 axial zwischen den beiden Scheiben 14 und 15 aufgenommen, wohingegen die radial verlaufenden Flansche 31 und 33 axial zwischen der ihnen zugeordneten Scheibe und einem scheibenförmigern Teil, nämlich 15 und 19 für den Flansch 31 sowie 14 und 18 für den Flansch 33, aufgenommen sind.

Wie aus den Figuren 2 und 3 ersichtlich, besitzen die Scheiben 14, 15, 18, 19 Aufnahmen, hier in Form von Fenstern 14a, 15a, 18a, 19a, für die Energiespeicher 9, 10.

Die Flansche 31, 32, 33 besitzen Aufnahmen bzw. Fenster 31 a, 32a, 33a zur Aufnahme der entsprechenden Energiespeicher 9, 8 und 10.

Wie bereits erwähnt, sind die Dämpfer 5, 6 und 7 derart aufgebaut, dass deren Energiespeicher 8, 9 und 10 jeweils gleichzeitig einsetzen bzw. komprimiert werden, so dass die einzelnen Dämpfer 5, 6 und 7 jeweils einstufig wirken. Wie aus dem vorerwähnten Stand der Technik jedoch bekannt ist, können die Energiespeicher bzw. die diese aufnehmenden Fenster auch derart ausgestaltet sein, dass zumindest einer der Dämpfer 5, 6 und 7 eine mehrstufige Federkennlinie aufweist, zum Beispiel als zweistufiger oder dreistufiger oder gar mehrstufiger Dämpfer ausgelegt ist. In diesem Zusammenhang wird auch auf die DE 2258543 A1 verwiesen, durch die in Zusammenhang mit einem Dämpfer eine Federanordnung bekannt geworden ist, welche eine zumindest dreistufige Kennlinie ermöglicht.

In vorteilhafter Weise kann das sowohl in Zugrichtung als auch in Schubrichtung vorhandene Verdrehspiel zwischen den Innenverzahnungen 34, 35 und 36 und der Außenverzahnung 30 gleich groß sein. Durch eine derartige Auslegung der Verdrehspiele wird gewährleistet, dass, sobald der Vordämpfer 37 überbrückt wird, alle Energiespeicher 8, 9, 10 der drei Dämpfer 5, 6, 7 praktisch gleichzeitig zur Wirkung kommen und somit eine sehr große Gesamtfederrate zur Wirkung kommt. Diese große Federrate bewirkt eine steile Moment-Verdrehwinkel-Kennlinie, also eine hohe Verdrehsteifigkeit. Die Überbrückung des Vordämpfers 37 wird durch Aufbrauchen des vorhandenen Verdrehspiels zwischen den Innenverzahnungen 34, 35, 36 und der Außenverzahnung 30 bewirkt, da nämlich dann die Innenverzahnungen 34, 35, 36 an den Flanken der Außenverzahnung 30 zur Anlage kommen.

Die durch die Dämpfer 5, 6 und 7 erzeugte Verdrehsteifigkeit zwischen dem Eingangsteil 2 und dem Ausgangsteil 3 kann, wie bereits erwähnt, eine allmähliche Zunahme aufweisen, indem wenigstens einer der Dämpfer 5, 6, 7, vorzugsweise alle drei, eine mehrstufige Federkennlinie aufweisen, wie dies zum Beispiel durch den vorerwähnten Stand der Technik bekannt ist.

Es ist aber auch alternativ oder zusätzlich möglich, eine allmähliche Zunahme des Verdrehwiderstandes zwischen Eingangsteil 2 und Ausgangsteil 3 dadurch zu erreichen, dass die Flansche 31, 32, 33 unterschiedliche Verdrehspiele in wenigstens einer der Relativverdrehmöglichkeiten gegenüber dem Nabenkörper 28 besitzen. Dies kann, wie an sich bekannt, durch entsprechende Abstimmung der Innenverzahnungen 34, 35, 36 gegenüber der Außenverzahnung 30 erfolgen, wobei der Nabenkörper 28 hierfür auch unterschiedliche Außenverzahnungen aufweisen kann, die entsprechend mit den Flanschen 31, 32 und 33 zusammenwirken.

So können beispielsweise die beiden Flansche 31 und 33 zumindest in einer Relativverdrehrichtung gegenüber dem Nabenkörper 28 ein geringeres Verdrehspiel aufweisen als der Flansch 32. Dadurch wird bewirkt, dass zumindest einige der Energiespeicher 9 und 10 der Dämpfer 6 und 7 komprimiert werden, bevor die Innenverzahnung 36 des Flansches 32 an den Flanken der entsprechenden Außenverzahnung 30 des Nabenkörpers 28 zur Anlage kommt. Es kann also ein abgestufter Einsatz der Dämpfer 5, 6 und 7 durch entsprechende Spielgebung im Bereich der Innenverzahnungen 34, 35, 36 und der Außenverzahnung 30 erzielt werden.

Der Vordämpfer 37 umfasst ein scheibenförmiges Bauteil 39, das vorzugsweise spielfrei mit dem Nabenkörper 28 drehverbunden ist. Hierfür besitzt das scheibenförmige Teil 39 an seinem Innenumfang zumindest einzelne Profilierungen, die zwischen Zähnen der Außenverzahnung 30 praktisch spielfrei eingreifen.

Die Schraubenfedern 38 sind hier in taschenförmigen Aufnahmen 40, 41 enthalten sowie in Fenstern 42 des scheibenförmigen Teils 39. Die Aufnahmen 40 sind durch in den Flansch 32 axial eingebrachte Anprägungen gebildet. Die Taschen 41 sind in einem Bauteil 43 vorgesehen, das vorzugsweise aus Kunststoff hergestellt ist und zusätzlich als Reibring dient. Das ringförmige Kunststoffbauteil 43 besitzt axiale Nasen 44, die in entsprechend ausgebildete Löcher bzw. Vertiefungen 45 des Flansches 32 eingreifen. Dadurch wird eine drehfeste Verbindung zwischen den beiden Teilen 32 und 43 gewährleistet. Bei Kompression der Energiespeicher 8 wird der Flansch 32 gegenüber den Scheiben 14, 15 verdreht, so dass das ringförmige Bauteil 43 an der Scheibe 15 eine Reibung erzeugt. Die Größe dieser Reibung ist abhängig von der axialen Kraft wenigstens einer auf der anderen Seite des Flansches 32 vorgesehenen Feder, vorzugsweise Tellerfeder 46. Diese Feder 46 ist axial verspannt zwischen der Scheibe 14 und dem Flansch 32. Die Dämpfer 6 und 7 besitzen bei dem dargestellten Ausführungsbeispiel ebenfalls Reibeinrichtungen 47, 48, die zwischen den entsprechenden Teilen, nämlich 15, 31, 19 bzw. 14, 33, 18 wirksam sind. Bei dem dargestellten Ausführungsbeispiel trägt die Scheibe 15 radial außen Reibbeläge 49. Die Reibbeläge 49 sind in bekannter Weise über Belagfedersegmente mit der Scheibe 15 verbunden.

Wie aus den Figuren 2 und 3 weiterhin ersichtlich ist, besitzen die Energiespeicher des äußeren Dämpfers 5 einen größeren Außendurchmesser als die Energiespeicher der Dämpfer 6 und 7. Zweckmäßig ist es, wenn die Energiespeicher des äußeren Dämpfers 5 eine größere Verdrehsteifigkeit erzeugen als die Energiespeicher der inneren Dämpfer 6 und/oder 7.

In Abänderung des dargestellten Ausführungsbeispieles könnte der Dämpfer 5 radial nach innen verlagert werden und die beiden Dämpfer 6 und 7 könnten radial außerhalb dieses Dämpfers 5 angeordnet sein. Weiterhin können die Energiespeicher der beiden Dämpfer 6 und 7, in radialer Richtung betrachtet, auch zumindest geringfügig versetzt angeordnet werden.

Weiterhin kann in Abänderung des beschriebenen Torsionsschwingungsdämpfers der Flansch 32 als Träger für die Reibbeläge 49 dienen, wobei dann der Flansch 32 mit den Flanschen 31 und 33 drehfest verbunden ist (zum Beispiel über Abstandsbolzen) und alle drei Flansche 31, 32, 33 keine Innenverzahnung 34, 35, 36 aufweisen, also vorzugsweise keine unmittelbare winkelmäßige Drehbegrenzung gegenüber dem Nabenkörper 28 besitzen. Bei einer derartigen Ausgestaltung muss dann die Drehmomentübertragung von den Dämpfern 5, 6 und 7 auf den Nabenkörper 28 mittels Profilierungen erfolgen, die zumindest an einer der Scheiben 14, 15 und gegebenenfalls auch an den scheibenförmigen Teilen 18, 19 vorgesehen sind, wobei diese Profilierung bzw. diese Profilierungen entsprechend mit der Außenverzahnung 30 zusammenwirken. Bei einer derartigen Ausgestaltung würden also die Flansche 31, 32 und 33 die Eingangsteile der Dämpfer 5, 6, 7 bilden.

### Bezugszeichenliste

- 1: Torsionsschwingungsdämpfer
- 2: Eingangsteil
- 3: Ausgangsteil
- 4: Dämpfungseinrichtung
- 5: Dämpfer
- 6: Dämpfer
- 7: Dämpfer
- 8: Energiespeicher Schraubenfeder
- 9: Energiespeicher Schraubenfeder
- 10: Energiespeicher Schraubenfeder
- 11: Rotationsachse
- 12: Durchmesserbereich
- 13: Durchmesserbereich
- 14: Scheibe
- 14a: Fenster
- 15: Scheibe
- 15a: Fenster
- 16: Aufnahme
- 17: Aufnahme
- 18: Scheibenförmiges Bauteil
- 18a: Fenster
- 19: Scheibenförmiges Bauteil
- 19a: Fenster
- 20: Abstandsbolzen
- 21: Abstandsbolzen
- 22: Verbindungselemente
- 23: Verbreiterter Fußbereich
- 24: Nietelemente
- 25: Axialer Schenkel
- 26: Nach innen abgebogener Bereich
- 27: Radiale Einschnitte
- 28: Nabenkörper
- 29: Innenverzahnung
- 30: Außenverzahnung
- 31: Flansch
- 31 a: Fenster
- 32: Flansch
- 32a: Fenster
- 33: Flansch
- 33a: Fenster
- 34: Innenverzahnung
- 35: Innenverzahnung
- 36: Innenverzahnung
- 37: Vordämpfer
- 38: Schraubenfeder
- 39: Scheibenförmiges Bauteil
- 40: Taschenförmige Aufnahme
- 41: Taschenförmige Aufnahme
- 42: Fenster
- 43: Kunststoffbauteil
- 44: Axiale Nasen
- 45: Löcher bzw. Vertiefungen
- 46: Feder
- 47: Reibeinrichtung
- 48: Reibeinrichtung
- 49: Reibbeläge
- 50: Axialer Abstand

## Patentansprüche

1. Torsionsschwingungsdämpfer, insbesondere Kupplungsscheibe, mit zumindest einem Eingangsteil und zumindest einem Ausgangsteil, die entgegen einer Dämpfungseinrichtung verdrehbar sind, welche wenigstens im Wesentlichen in Umfangs- bzw. Tangentialrichtung ausgerichtete Energiespeicher und parallel zu diesen wirksame Hysteresemittel aufweisen, **dadurch gekennzeichnet, dass** die Dämpfungseinrichtung (1) wenigstens drei parallel zueinander wirksame Dämpfer umfasst, nämlich einen ersten Dämpfer (5), einen zweiten Dämpfer (6) und einen dritten Dämpfer (7), wobei die Energiespeicher (8) des ersten Dämpfers (5) auf einem ersten Durchmesserbereich (12) angeordnet sind und die Energiespeicher (9, 10) des zweiten und dritten Dämpfers (6, 7) jeweils auf einem gegenüber dem ersten Durchmesserbereich (12) radial versetzten zweiten und dritten Durchmesserbereich (13) angeordnet sind.

2. Torsionsschwingungsdämpfer nach Anspruch 1, **dadurch gekennzeichnet, dass** der zweite und dritte Durchmesserbereich (13) im Wesentlichen identisch sind.

3. Torsionsschwingungsdämpfer nach Anspruch 1 oder 2, **dadurch gekennzeichnet, dass** der erste Durchmesserbereich (12) größer ist als der zweite und dritte Durchmesserbereich (13).

4. Torsionsschwingungsdämpfer nach einem der Ansprüche 1 bis 3, **dadurch gekennzeichnet, dass** die Energiespeicher (9, 10) des zweiten und dritten Dämpfers (6, 7) einen axialen Abstand aufweisen und sich die Energiespeicher (8) des ersten Dämpfers (5) im Bereich dieses Abstandes (14) befinden, jedoch radial versetzt sind gegenüber den Energiespeichern (9, 10) des zweiten und dritten Dämpfers (6, 7).

5. Torsionsschwingungsdämpfer nach einem der Ansprüche 1 bis 4, **dadurch gekennzeichnet, dass** die Energiespeicher (8) des ersten Dämpfers (5) einen größeren Außendurchmesser besitzen als die Energiespeicher (9, 10) des zweiten und dritten Dämpfers (6, 7).

6. Torsionsschwingungsdämpfer nach einem der Ansprüche 1 bis 5, **dadurch gekennzeichnet, dass**, in axialer Richtung der Rotationsachse (11) des Torsionsschwingungsdämpfers betrachtet, sich die Energiespeicher (9, 10) des zweiten und dritten Dämpfers (6, 7) mit den Energiespeichern (8) des ersten Dämpfers (5) überlappen.

7. Torsionsschwingungsdämpfer nach einem der Ansprüche 1 bis 6, **dadurch gekennzeichnet, dass** die Energiespeicher wenigstens eines Dämpfers durch Schraubenfedern gebildet sind.

8. Torsionsschwingungsdämpfer nach einem der Ansprüche 1 bis 7, **dadurch gekennzeichnet, dass** das Eingangsteil zwei axial beabstandete, drehfest miteinander verbundene Scheiben (14, 15) umfasst, wobei jede Scheibe wiederum mit einem axial von dieser beabstandeten, scheibenförmigen Teil (18, 19) drehfest verbunden ist und diese scheibenförmigen Teile (18, 19) jeweils auf der dem zwischen den beiden Scheiben (14, 15) vorhandenen Zwischenraum abgekehrten Seite der Scheiben (14, 15) angeordnet sind.

9. Torsionsschwingungsdämpfer nach einem der Ansprüche 1 bis 8, **dadurch gekennzeichnet, dass** das Ausgangsteil (3) einen Nabenkörper (28) umfasst, welcher eine Innenverzahnung (29) und eine Außenprofilierung (30) besitzt, wobei diese Außenprofilierung (30) mit einer Innenprofilierung (34, 35, 36) von wenigstens einem von drei auf dem Nabenkörper (28) aufgenommenen Flanschen (31, 32, 33) zusammenwirkt.

10. Torsionsschwingungsdämpfer nach Anspruch 9, **dadurch gekennzeichnet, dass** zwischen der Außenprofilierung (30) und der Innenprofilierung (34, 35, 36) von wenigstens einem der Flansche (31, 32, 33) ein Verdrehspiel vorhanden ist.

11. Torsionsschwingungsdämpfer nach Anspruch 10, **dadurch gekennzeichnet, dass** im Verdrehspiel Energiespeicher (38) geringerer Steifigkeit eines Leerlaufdämpfers (37) wirksam sind.

12. Torsionsschwingungsdämpfer nach einem der Ansprüche 8 bis 11, **dadurch gekennzeichnet, dass** von den drei auf dem Nabenkörper (28) aufgenommenen Flanschen (31, 32, 33) der erste radial verlaufende Flansch (32) in dem zwischen den beiden Scheiben (14, 15) vorhandenen Zwischenraum aufgenommen ist und der zweite (31) und dritte (33) radial verlaufende Flansch jeweils in einem Zwischenraum aufgenommen ist, der vorhanden ist zwischen jeweils einer der Scheiben (14, 15) und dem dieser in axialem Abstand zugeordneten scheibenförmigen Teil (18, 19).

13. Torsionsschwingungsdämpfer nach einem der Ansprüche 8 bis 12, **dadurch gekennzeichnet, dass** sowohl die Scheiben (14, 15), die scheibenförmigen Teile (18, 19) und die Flansche (31, 32, 33) Aufnahmen für die Energiespeicher (8, 9, 10) der von diesen Bauteilen jeweils gebildeten Dämpfer (5, 6, 7) aufweisen.

14. Torsionsschwingungsdämpfer nach einem der Ansprüche 8 bis 13, **dadurch gekennzeichnet, dass** alle drei Flansche (31, 32, 33) ein Verdrehspiel gegenüber dem Nabenkörper (28) aufweisen.

15. Torsionsschwingungsdämpfer nach einem der Ansprüche 8 bis 14, **dadurch gekennzeichnet, dass** axial zwischen den beiden Scheiben (14, 15) und dem ersten Flansch wenigstens eine Reibeinrichtung (43, 46) vorgesehen ist.

16. Torsionsschwingungsdämpfer nach einem der Ansprüche 8 bis 15, **dadurch gekennzeichnet, dass** axial zwischen wenigstens einem Flansch (31, 33) des zweiten (6) und dritten (7) Dämpfers und jeweils dem diesem Flansch (31 und/oder 33) zugeordneten scheibenförmigen Teil (19, 18) und der Scheibe (15, 14) eine Reibeinrichtung (47, 48) vorgesehen ist.

17. Torsionsschwingungsdämpfer nach Anspruch 15 oder 16, **dadurch gekennzeichnet, dass** die den einzelnen Dämpfern zugeordneten Reibeinrichtungen radial innerhalb der entsprechenden Energiespeicher (8, 9, 10) angeordnet sind.

18. Torsionsschwingungsdämpfer nach einem der Ansprüche 9 bis 17, **dadurch gekennzeichnet, dass** ein Leerlaufdämpfer innerhalb des Verdrehspiels zwischen der Außenprofilierung (30) und der Innenprofilierung (34, 35, 36) wenigstens eines Flansches wirksam ist.

19. Torsionsschwingungsdämpfer nach Anspruch 18, **dadurch gekennzeichnet, dass** die Energiespeicher (38) des Leerlaufdämpfers (37) radial innerhalb der Energiespeicher des zweiten und des dritten Dämpfers (6, 7) angeordnet sind.

20. Torsionsschwingungsdämpfer nach einem der Ansprüche 9 bis 19, **dadurch gekennzeichnet, dass** der Nabenkörper (28) ein mit diesem drehfestes Scheibenteil (39) trägt, welches Aufnahmen aufweist für die Energiespeicher (38) des Leerlaufdämpfers (37).

21. Torsionsschwingungsdämpfer nach einem der Ansprüche 9 bis 20, **dadurch gekennzeichnet, dass** der erste Flansch (32) Aufnahmen (40) für die Energiespeicher des Leerlaufdämpfers (37) besitzt.

22. Torsionsschwingungsdämpfer nach einem der Ansprüche 9 bis 21, **dadurch gekennzeichnet, dass** mit dem ersten Flansch (32) ein ringförmiges Bauteil (43) drehfest verbunden ist, das axial zwischen diesem ersten Flansch (32) und einer der Scheiben (14, 15) angeordnet ist, ein Bestandteil einer Reibeinrichtung bildet und Aufnahmen (41) für die Energiespeicher (38) des Leerlaufdämpfers (37) begrenzt.

23. Torsionsschwingungsdämpfer nach einem der Ansprüche 19 bis 22, **dadurch gekennzeichnet, dass** das Scheibenteil (39) des Leerlaufdämpfers (37) axial zwischen einer der Scheiben (14, 15) und dem ersten Flansch (32) angeordnet ist.

## Claims

1. Torsional vibration damper, in particular clutch disc, having at least one input part and at least one output part which can rotate counter to a damping device, which have at least substantially circumferentially or tangentially aligned energy stores and hysteresis means which act parallel to said energy stores, **characterized in that** the damping device (1) comprises at least three dampers which act parallel to one another, specifically a first damper (5), a second damper (6) and a third damper (7), with the energy stores (8) of the first damper (5) being arranged on a first diameter region (12) and with the energy stores (9, 10) of the second and third dampers (6, 7) being arranged in each case on a second and third diameter region (13) offset radially with respect to the first diameter region (12).

2. Torsional vibration damper according to Claim 1, **characterized in that** the second and third diameter region (13) are substantially identical.

3. Torsional vibration damper according to Claim 1 or 2, **characterized in that** the first diameter region (12) is greater than the second and third diameter region (13).

4. Torsional vibration damper according to one of Claims 1 to 3, **characterized in that** the energy stores (9, 10) of the second and third dampers (6, 7) have an axial spacing, and the energy stores (8) of the first damper (5) are situated in the region of said spacing (14) but are radially offset with respect to the energy stores (9, 10) of the second and third dampers (6, 7).

5. Torsional vibration damper according to one of Claims 1 to 4, **characterized in that** the energy stores (8) of the first damper (5) have a greater outer diameter than the energy stores (9, 10) of the second and third dampers (6, 7).

6. Torsional vibration damper according to one of Claims 1 to 5, **characterized in that** the energy stores (9, 10) of the second and third dampers (6, 7) overlap the energy stores (8) of the first damper (5) as viewed in the axial direction of the rotational axis (11) of the torsional vibration damper.

7. Torsional vibration damper according to one of Claims 1 to 6, **characterized in that** the energy stores of at least one damper are formed by helical springs.

8. Torsional vibration damper according to one of Claims 1 to 7, **characterized in that** the input part comprises two axially spaced-apart discs (14, 15) which are rotationally fixedly connected to one another, with each disc in turn being rotationally fixedly connected to a disc-shaped part (18, 19) which is axially spaced apart from said disc, and with said disc-shaped parts (18, 19) being arranged in each case on those sides of the discs (14, 15) which face away from the intermediate space provided between the two discs (14, 15).

9. Torsional vibration damper according to one of Claims 1 to 8, **characterized in that** the output part (3) comprises a hub body (28) which has an inner toothing (29) and an outer profiling (30), with said outer profiling (30) interacting with an inner profiling (34, 35, 36) of at least one of three flanges (31, 32, 33) which are held on the hub body (28).

10. Torsional vibration damper according to Claim 9, **characterized in that** a range of rotational play is provided between the outer profiling (30) and the inner profiling (34, 35, 36) of at least one of the flanges (31, 32, 33).

11. Torsional vibration damper according to Claim 10, **characterized in that** energy stores (38), of relatively low stiffness, of an idle damper (37) act in the range of rotational play.

12. Torsional vibration damper according to one of Claims 8 to 11, **characterized in that**, of the three flanges (31, 32, 33) which are held on the hub body (28), the first radially running flange (32) is held in the intermediate space provided between the two discs (14, 15), and the second (31) and third (33) radially running flanges are held in each case in an intermediate space which is provided between in each case one of the discs (14, 15) and the disc-shaped part (18, 19) assigned thereto with an axial spacing.

13. Torsional vibration damper according to one of Claims 8 to 12, **characterized in that** the discs (14, 15), the disc-shaped parts (18, 19) and the flanges (31, 32, 33) all have receptacles for the energy stores (8, 9, 10) of the dampers (5, 6, 7) formed in each case by said components.

14. Torsional vibration damper according to one of Claims 8 to 13, **characterized in that** all three flanges (31, 32, 33) have a range of rotational play with respect to the hub body (28).

15. Torsional vibration damper according to one of Claims 8 to 14, **characterized in that** at least one friction device (43, 46) is provided axially between the two discs (14, 15) and the first flange.

16. Torsional vibration damper according to one of Claims 8 to 15, **characterized in that** a friction device (47, 48) is provided axially between at least one flange (31, 33) of the second (6) and third (7) dampers and the disc-shaped part (19, 18) assigned to said flange (31 and/or 33) in each case and the disc (15, 14).

17. Torsional vibration damper according to Claim 15 or 16, **characterized in that** the friction devices which are assigned to the individual dampers are arranged radially within the corresponding energy stores (8, 9, 10).

18. Torsional vibration damper according to one of Claims 9 to 17, **characterized in that** an idle damper acts within the range of rotational play between the outer profiling (30) and the inner profiling (34, 35, 36) of at least one flange.

19. Torsional vibration damper according to Claim 18, **characterized in that** the energy stores (38) of the idle damper (37) are arranged radially within the energy stores of the second and third dampers (6, 7).

20. Torsional vibration damper according to one of Claims 9 to 19, **characterized in that** the hub body (28) supports a disc part (39) which is rotationally fixed thereto and which has receptacles for the energy stores (38) of the idle damper (37).

21. Torsional vibration damper according to one of Claims 9 to 20, **characterized in that** the first flange (32) has receptacles (40) for the energy stores of the idle damper (37).

22. Torsional vibration damper according to one of Claims 9 to 21, **characterized in that** an annular component (43) is rotationally fixedly connected to the first flange (32), which component (43) is arranged axially between said first flange (32) and one of the discs (14, 15), forms a constituent part of a friction device and delimits receptacles (41) for the energy stores (38) of the idle damper (37).

23. Torsional vibration damper according to one of Claims 19 to 22, **characterized in that** the disc part (39) of the idle damper (37) is arranged axially between one of the discs (14, 15) and the first flange (32).

## Revendications

1. Amortisseur de vibrations torsionnelles, en particulier disque d'embrayage, comprenant au moins une partie d'entrée et au moins une partie de sortie, qui peuvent tourner à l'encontre d'un dispositif d'amortissement, qui présentent au moins des accumulateurs d'énergie orientés essentiellement dans la direction périphérique ou tangentielle et des moyens d'hystérésis agissant parallèlement à ceux-ci, **caractérisé en ce que** le dispositif d'amortissement (1) comprend au moins trois amortisseurs agissant parallèlement les uns aux autres, à savoir un premier amortisseur (5), un deuxième amortisseur (6) et un troisième amortisseur (7), les accumulateurs d'énergie (8) du premier amortisseur (5) étant disposés sur une première région de diamètre (12) et les accumulateurs d'énergie (9, 10) du deuxième et du troisième amortisseur (6, 7) étant disposés à chaque fois sur une deuxième et troisième région de diamètre (13) décalées radialement par rapport à la première région de diamètre (12).

2. Amortisseur de vibrations torsionnelles selon la revendication 1, **caractérisé en ce que** la deuxième et la troisième région de diamètre (13) sont essentiellement identiques.

3. Amortisseur de vibrations torsionnelles selon la revendication 1 ou 2, **caractérisé en ce que** la première région de diamètre (12) est supérieure à la deuxième et à la troisième région de diamètre (13).

4. Amortisseur de vibrations torsionnelles selon l'une quelconque des revendications 1 à 3, **caractérisé en ce que** les accumulateurs d'énergie (9, 10) du deuxième et du troisième amortisseur (6, 7) présentent un espacement axial et les accumulateurs d'énergie (8) du premier amortisseur (5) se trouvent dans la région de cet espacement (14), mais sont décalés radialement par rapport aux accumulateurs d'énergie (9, 10) du deuxième et du troisième amortisseur (6, 7).

5. Amortisseur de vibrations torsionnelles selon l'une quelconque des revendications 1 à 4,
**caractérisé en ce que** les accumulateurs d'énergie (8) du premier amortisseur (5) possèdent un plus grand diamètre extérieur que les accumulateurs d'énergie (9, 10) du deuxième et du troisième amortisseur (6, 7).

6. Amortisseur de vibrations torsionnelles selon l'une quelconque des revendications 1 à 5, **caractérisé en ce que**, considéré dans la direction axiale de l'axe de rotation (11) de l'amortisseur de vibrations torsionnelles, les accumulateurs d'énergie (9, 10) du deuxième et du troisième amortisseur (6, 7) chevauchent les accumulateurs d'énergie (8) du premier amortisseur (5).

7. Amortisseur de vibrations torsionnelles selon l'une quelconque des revendications 1 à 6, **caractérisé en ce que** les accumulateurs d'énergie d'au moins un amortisseur sont formés par des ressorts à boudin.

8. Amortisseur de vibrations torsionnelles selon l'une quelconque des revendications 1 à 7, **caractérisé en ce que** la partie d'entrée comprend deux disques (14, 15) espacés axialement et connectés l'un à l'autre de manière solidaire en rotation, chaque disque étant à son tour connecté de manière solidaire en rotation à une partie en forme de disque (18, 19) espacée axialement de celui-ci, et ces parties en forme de disque (18, 19) étant à chaque fois disposées du côté des disques (14, 15) opposé à l'espace intermédiaire existant entre les deux disques (14, 15).

9. Amortisseur de vibrations torsionnelles selon l'une quelconque des revendications 1 à 8, **caractérisé en ce que** la partie de sortie (3) comprend un corps de moyeu (28) qui possède une denture interne (29) et un profilage externe (30), ce profilage externe (30) coopérant avec un profilage interne (34, 35, 36) d'au moins une bride parmi trois brides (31, 32, 33) reçues sur le corps de moyeu (28).

10. Amortisseur de vibrations torsionnelles selon la revendication 9, **caractérisé en ce qu'**entre le profilage externe (30) et le profilage interne (34, 35, 36) d'au moins l'une des brides (31, 32, 33) est prévu un jeu de déformation.

11. Amortisseur de vibrations torsionnelles selon la revendication 10, **caractérisé en ce que** dans le jeu de déformation agissent des accumulateurs d'énergie (38) de plus faible rigidité d'un amortisseur de marche à vide (37).

12. Amortisseur de vibrations torsionnelles selon l'une quelconque des revendications 8 à 11, **caractérisé en ce que** parmi les trois brides (31, 32, 33) reçues sur le corps de moyeu (28), la première bride s'étendant radialement (32) est reçue dans l'espace intermédiaire prévu entre les deux disques (14,15) et la deuxième (31) et la troisième (33) bride s'étendant radialement sont reçues à chaque fois dans un espace intermédiaire respectif qui est prévu à chaque fois entre l'un des disques (14, 15) et la partie en forme de disque (18, 19) associée à celui-ci à distance axiale.

13. Amortisseur de vibrations torsionnelles selon l'une quelconque des revendications 8 à 12, **caractérisé en ce que** les disques (14, 15), les parties en forme de disque (18, 19) et les brides (31, 32, 33) présentent tous des logements pour les accumulateurs d'énergie (8, 9, 10) des amortisseurs (5, 6, 7) formés à chaque fois par ces composants.

14. Amortisseur de vibrations torsionnelles selon l'une quelconque des revendications 8 à 13, **caractérisé en ce que** toutes les trois brides (31, 32, 33) présentent un jeu de déformation par rapport au corps de moyeu (28).

15. Amortisseur de vibrations torsionnelles selon l'une quelconque des revendications 8 à 14, **caractérisé en ce que** l'on prévoit au moins un dispositif de friction (43, 46) axialement entre les deux disques (14, 15) et la première bride.

16. Amortisseur de vibrations torsionnelles selon l'une quelconque des revendications 8 à 15, **caractérisé en ce que** l'on prévoit axialement entre au moins une bride (31, 33) du deuxième (6) et du troisième (7) amortisseur et à chaque fois la partie en forme de disque (19, 18) associée à cette bride (31 et/ou 33) et le disque (15, 14) un dispositif de friction (47, 48).

17. Amortisseur de vibrations torsionnelles selon l'une quelconque des revendications 15 ou 16, **caractérisé en ce que** les dispositifs de friction associés aux amortisseurs individuels sont disposés radialement à l'intérieur des accumulateurs d'énergie correspondants (8, 9, 10).

18. Amortisseur de vibrations torsionnelles selon l'une quelconque des revendications 9 à 17, **caractérisé en ce qu'**un amortisseur de marche à vide agit à l'intérieur du jeu de déformation entre le profilage externe (30) et le profilage interne (34, 35, 36) d'au moins une bride.

19. Amortisseur de vibrations torsionnelles selon la revendication 18, **caractérisé en ce que** les accumulateurs d'énergie (38) de l'amortisseur de marche à vide (37) sont disposés radialement à l'intérieur des accumulateurs d'énergie du deuxième et du troisième amortisseur (6, 7).

20. Amortisseur de vibrations torsionnelles selon l'une quelconque des revendications 9 à 19, **caractérisé en ce que** le corps de moyeu (28) porte une partie de disque (39) solidaire en rotation avec lui, qui présente des logements pour les accumulateurs d'énergie (38) de l'amortisseur de marche à vide (37).

21. Amortisseur de vibrations torsionnelles selon l'une quelconque des revendications 9 à 20, **caractérisé en ce que** la première bride (32) possède des logements (40) pour les accumulateurs d'énergie de l'amortisseur de marche à vide (37).

22. Amortisseur de vibrations torsionnelles selon l'une quelconque des revendications 9 à 21, **caractérisé en ce qu'**un composant de forme annulaire (43) est connecté de manière solidaire en rotation à la première bride (32), et est disposé axialement entre cette première bride (32) et l'un des disques (14, 15), forme un constituant d'un dispositif de friction et limite des logements (41) pour les accumulateurs d'énergie (38) de l'amortisseur de marche à vide (37).

23. Amortisseur de vibrations torsionnelles selon l'une quelconque des revendications 19 à 22, **caractérisé en ce que** la partie de disque (39) de l'amortisseur de marche à vide (37) est disposée axialement entre l'un des disques (14, 15) et la première bride (32).
